(19)

Europäisches
Patentamt
European
Patent Office
Office européen
des brevets

(11)  **EP 3 038 024 A1**

(12)  **EUROPEAN PATENT APPLICATION**

(43) Date of publication:
29.06.2016  Bulletin 2016/26

(51) Int Cl.:
*G06Q 10/04* (2012.01)

(21) Application number: **14382564.4**

(22) Date of filing: **23.12.2014**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Telefonica Digital España, S.L.U.
28013 Madrid (ES)**

(72) Inventor: **Frías Martínez, Enrique
28013 Madrid (ES)**

(74) Representative: **Carlos Hernando, Borja
Garrigues IP, S.L.P.
Hermosilla, 3
28001 Madrid (ES)**

(54)  **A computer implemented method, a system and computer program products for selecting representatives' paths of commuting routes**

(57)  A computer implemented method, a system and computer program products for selecting representative's paths of commuting routes

The method comprising using at least one processor of a computer system for: determining an origin location (H) and a destination location (W) of an user by using network communication data traces; selecting from said performed network communication data traces, the network communication data traces that are related to a commuting from said origin location (H) to said destination location (W), or vice versa, and determining a set of routes; computing a commuting graph (G) including a number of vertices representing said plurality of base stations, and edges representing the transitions defined by each determined route; extracting from the computed commuting graph (G) a set of commuting paths; clustering the extracted set of commuting paths into different groups having a geographical similarity; and selecting a representative path from each one of said clustered different groups.

Fig. 1

**Description**

Field of the invention

The present invention generally relates to methods and systems for identifying commuting routes. In particular, the invention relates to a computer implemented method, a system and computer program products for selecting representative's paths of commuting routes of an individual using network-driven cell phone-network data.

Background of the invention

Network-driven cell phone-network data, as opposed to event-driven cell-phone network data, captures periodic location information of the network triggered by updates requested by the network in order to know where the cell phone is located. Event-driven cell-phone network data refers to location information collected when a service (call, SMS, MMS, Internet access, etc.) is actively requested by the user. In general Event-driven cell-phone location data is a subset of network-driven data, because as a part of those active services there are elements triggered by the network.

Traditionally the information generated by event-driven cell-phone network data has been referred to as Call detail records (CDRs) as it stores the information needed for invoicing purposes. CDRs have two inherent limitations: (1) location is captured only when a service takes place (i.e., low resolution), and (2) the captured location approximates the actual position (i.e., coarse granularity). Network-driven cell phone-network data solves the first limitation while stills suffer from the second one.

The literature presents a variety of approaches to identify commuting routes using cell-phone network data. Typically approaches have focused on event-driven network data (CDRs) or handoff patterns between towers. Also, commuting routes have been defined differently by different approaches, ranging from a sequence of cells, to the actual commuting streets.

Document, "Scalable Mining of Common Routes in Mobile Communication Network Traffic Data", Pervasive'12, [1], provides a methodology in which it can be count how many times individuals contact to each cell tower and extracts common (frequently visited) sequence of cell towers by using CDRs.

On another hand, document "Route classification using cellular handoff patterns", Ubicomp'11 [2] provides a methodology in which it can be estimated which road people take by using hand-off patterns instead of CDRs. Hand-off patterns are the network signal patterns recorded when an individual moves from one cell tower to the other cell. In [2] authors collected hand-off patterns when they drove along each road, and they found that hand-off patterns are consistent for each road. Based on these 'in-advance' references, authors estimate the individuals' route. First, this approach cannot apply to CDRs but to hand-off data, which is more detail data. Second, authors need to collect such hand-off patterns by driving each road and collecting hand-off signals by themselves.

The goal of the methodology provided in [2] is to give a commuting route at a street-level which is not an object of present invention. In any case, by giving a commuting route at a street there is no assurance that the user is actually in that street, the outcome of said methods is just a probability. Said approach is based on handoff patterns and as a result the information available is very limited. Also the solution in [2] can suggest the street-level commuting route, but only for the street/route where they have reference data in advance.

Document [1], focuses on the same problem proposed in present invention. In [1] the authors extract the sequence of cell towers that individuals usually contact to. Nevertheless, the main problem of this approach is that the authors do not consider real data but only simulated data. As a result they develop and validate an algorithm that cannot handle the effects that real data has, including the Ping-Pong effect, cycles in the sequences of cells, redundant edges, implausible paths, etc., which actually is what makes the problem difficult. Another difference of present invention approach is that the proposed methodology is able to identify from all the information the sequences that are generated from a commuting between an origin location of the user (such as the home) to a destination location of the user (such as the work) while [1] assumes that they already have only the relevant sequences to the route they want to identify.

References:

[1] O. Gornerup. Scalable Mining of Common Routes in Mobile Communication Network Traffic Data. In Proceedings of the 10th international conference on Pervasive Computing, Pervasive'12, pages 99-106, 2012.

[2] R. A. Becker et.al. Route classification using cellular handoff patterns, In Proceedings of the 13th international conference on Ubiquitous Computing, Ubicomp'11, pages 123-132, 2011.

[3] S. Isaacman et.al. Identifying important places in people's lives from cellular network data. In Proceedings of the 9th international conference on Pervasive Computing, Pervasive'11, pages 133-151, 2011.

Summary of the Invention

Embodiments of the present invention provides in a first aspect a computer implemented method for selecting representatives paths of commuting routes, the method comprising using at least one processor of a computer system for: determining an origin location (e.g. the home) and a destination location (e.g. the work) of an user on a region by using network communication data traces generated by said user passing through a plurality of base stations giving coverage to said region; selecting from said performed network communication data traces, the network communication data traces that are related to a commuting from said origin location to said destination location, or vice versa, and determining with the selected network communication data traces, and for a certain period of time, a set of routes; computing a commuting graph including a number of vertices representing said plurality of base stations, and edges representing the transitions defined by each determined route; extracting from the computed commuting graph a set of commuting paths used by the user to move from the origin location to the destination location, or vice versa; clustering the extracted set of commuting paths into different groups having a geographical similarity; and selecting a representative path from each one of said clustered different groups, said representative path being selected based on a dissimilarity value that the representative path has with respect to each one of the rest of commuting paths included in each clustered different group.

According to an embodiment, the representative path is computed by means of a weighted medoid technique.

According to another embodiment, the selected network communication data traces used for determining the set of routes are performed only once in each base station of said plurality of base stations.

According to the invention, each edge of said commuting graph includes a weight which depends on the number of times a transition from a given vertex of the commuting graph is done to another vertex. In addition, the computed commuting graph also includes the origin location and the destination location as vertices.

A geographical heuristics algorithm may be further applied to said computed commuting graph in order to reduce the number of the determined set of routes and to reduce redundant edges of the commuting graph. In this case, the weight of the edges can be adjusted after having removed a redundant edge.

According to an embodiment, said certain period of time at least comprises five working days. Alternatively, the certain period of time may comprise two non-working days (e.g. weekends).

Other arrangements of embodiments of the invention that are disclosed herein include a system configured to implement one or more aspects of the disclosed methods, as well as software programs to perform the method embodiment steps and operations summarized above and disclosed in detail below. More particularly, a computer program product is one embodiment that has a computer-readable medium including computer program instructions encoded thereon that when executed on at least one processor in a computer system causes the processor to perform the operations indicated herein as embodiments of the invention.

Brief Description of the Drawings

The previous and other advantages and features will be more fully understood from the following detailed description of embodiments, with reference to the attached drawings, which must be considered in an illustrative and non-limiting manner, in which:

Fig. 1 is a diagram that shows an example of the method steps implemented by the processor for selecting representative's paths of commuting routes in accordance with embodiments of the present invention.

Fig. 2 illustrates components of a computer system and the iteration with a user terminal in accordance with embodiments of the present invention.

Fig. 3 is an example of the set of routes obtained for the user from the origin location H to destination location W. Voronoi regions colored in greyscale had at least one event registered. The numerical labels represent the BTS identifiers.

Fig. 4 is a representation of all raw commuting routes identified for the user that goes from Home (H) located in BTS 2594 to Work (W) located in BTS 769. The dots represent the location of the BTS, and are surrounded by the corresponding Voronoi element of the tessellation. The lines represent the jumps for each one of the given routes. The greyscale darkness of each Voronoi element represents the number of time that each BTS was activated by a given route.

Fig. 5 presents the same information contained in Fig. 4 but after applying steps 101 and 102 of the proposed method. No geographical information has been considered for building this graph. The graph seems to presents four possible trajectories to go from BTS 2333 to Work (W), but if the geographical information presented in Fig. 4 is considered, there is only one possible path.

Fig. 6 is a schematic example of geographical heuristic.

Fig. 7 is a graph obtained after applying the algorithm for graph reconstruction using Geographical Heuristics to the original graph presented in Fig. 5.

Fig. 8 is a graph obtained after applying the algorithm for removing redundancy to the original graph presented in Fig. 7 that was the result of applying the geographical heuristics.

Fig. 9 is a graphical representation of the two commuting routes for a user after applying the extraction of paths in the graph of Fig. 8, clustering the paths, and obtaining the commuting routes.

Detailed Description of the invention

In order to reconstruct commuting routes by selecting representatives' paths, the proposed method makes use of the passive information extracted from cell phone networks. Cell phone networks are built using base transceiver station (BTS) towers that are in charge of communicating cell phones with the network. A given geographical region will be serviced by a set of BTSs *BTS* = {*bts1,..., btsN}*, each one characterized by its geographical coordinates (latitude, longitude). For simplicity, it is assumed that the area of coverage of each BTS can be approximated by a 2-dimensional nonoverlapping polygon, and approximate it using Voronoi tessellation.

Network communication data traces, or Network-driven cell phone-network data (NDCND) as it will be referred from now on, is generated by events triggered by the network or the cell-phone, where the user did not necessarily requested any services. As a result there is an entry for each event of the network, with its associated timestamp and the BTS that handled it, which gives an indication of the geographical location of the mobile phone at a given moment in time. It has to be noted that no information about the position of a user within a cell is known. The set of fields typically contained include: (a) type of event; (b) encrypted phone number that triggered the event; (b) identifier of the BTS that handled the event; (c) date and time of the call; and (W) duration of the call.

The types of events may include passive location information such as: (a) crossing LAC areas (Location Area Codes) or (b) ping triggered by the network to update the position of the cell phone. Also included are events generated by the user such as: (a) switching the phone on and off or (b) making or receiving calls, SMS, MMS. As a result the location information is much denser than when only considering CDR information.

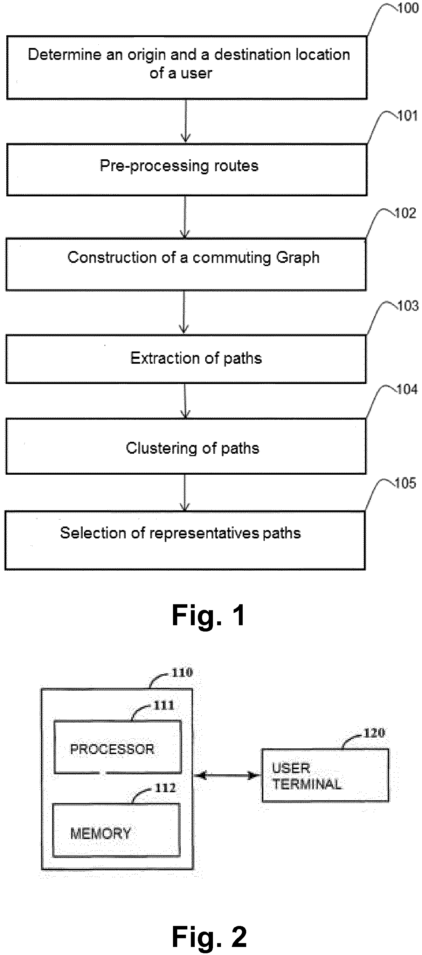

Fig. 1 illustrates the overall method steps executed by a processor of a computer system for selecting representatives' paths of commuting routes. Components of the computer system are illustrated in Fig. 2. The computer system 110 at least includes a processor 111 having various hardware components including a central processing unit (CPU), among other components, and a memory 112. The memory 112 stores computer program code instructions that control the processes for executing the proposed methods.

With reference to Fig. 1, first of all, it has to be estimated, step 100, an origin and a destination locations (in this particular case the home H and work W) of a user or individual. Therefore, given an initial set of BTS=(bts1;bts2; ...; btsN) that provides coverage to a region R characterized by its Voronoi tessellation R = (V1, V2, ... , VN), and a user preferably identified by a user_d; and the set $\varepsilon$={e1, ...,eN} of n NDCND events generated by the user during a certain threshold period of time (for instance during two weeks), the proposed method seeks to identify the commuting route(s) of said user for going from home (H) to work (W) and vice versa, expressing the commuting routes as a set of ordered BTS.

From cell-phone traces, there are many methods to estimate where home H and work W locations are, which can also be applied when using network-driven cell phone network data (NDCND). Although many techniques are proposed to address this problem, the proposed method uses the one described in [3] due to simplicity but high accuracy. It basically finds clusters of cell towers (or a cell tower) that are involved in the largest number of calls during home and work hours.

Then, the proposed method, given the user_id (e.g. a phone number), its home H and work W locations, and the set of NDCND events for that phone during the time period available, according to an embodiment, from the set of NDCND, selects step 101) the ones that are related to a commuting from home H to work W, and constructs with those a set of routes for the days considered. For instance, only events happening on working days are considered. However, if the origin and destination locations previously determined do not correspond with the home H and work W of the user, it is possible to consider other periods of time, for instance the weekends.

Once individual routes have been identified, the method constructs, step 102), a graph G where the nodes are the BTS stations and the edges the transitions defined by each route. After that, step 103) a set of commuting paths used by the user to go from home H to work W are extracted. This step transforms graph G into a set of improved routes, and clusters, step 104), said set of commuting paths into different groups that have a very similar geographical layout.

Finally, step 105), a representative path is selected from each one of said clustered different groups preferably based on a dissimilarity value that the representative path has with respect to each one of the rest of commuting paths included in each clustered different group. For instance, the representative path may be computed by means of a weighted medoid technique.

Due to the sparse nature of the paths obtained from NDCND events a variety of routes at a BTS level may be obtained which actually correspond to the same geographical route. Consequently, once step 102) is performed, the method may also apply a Geographical Heuristics to graph G to reduce the number of the set of routes previously determined and to reduce redundant edges of the graph G. A redundant edge is an edge that does not provides extra information regarding the route, and that is convenient to eliminate in order to reduce the number of possible commuting routes in order to simplify the graph.

Following each one of the method steps will be explained in more detail.

Pre-processing of Routes (Step 101)

In order to reconstruct the routes between two locations H and W of a user the method needs to extract all the network events/traces related to said user while (s)he is travelling from H to W. As already said, in this particular case H and W will always be Home and Work (or vice versa), but the method can be applied to any two locations.

To avoid relating on time assumptions about when the commuting is done, the method uses an approach by detecting whenever the user leaves H and then arrives at W (without passing back to H in the meantime). The method takes all the events between these two events and considers the sequence of BTSs to be one route the user takes to travel between H and W. The method considers that a user left some location H, if some BTS far enough from H has registered an event, that is, an event from some BTS not in the Voronoi neighborhood of H. Similarly, the method considers a user to have arrived at some location W whenever an event was registered in the Voronoi neighborhood of W. The method selects all the events between leaving home and arriving to work (or vice versa). If the time difference between these two events is smaller that time T, the method considers the sequence of events to be an appropriate observation of a displacement from H to W. This filtering by duration is performed as it might be that the user goes to some completely different place and comes by at W much later. The extracted route therefore wouldn't represent a typical trip between H and W but rather two trips between H and some other place C and from C to W. A threshold of 2 hours can be used, which is considered to be a limit for commuting time.

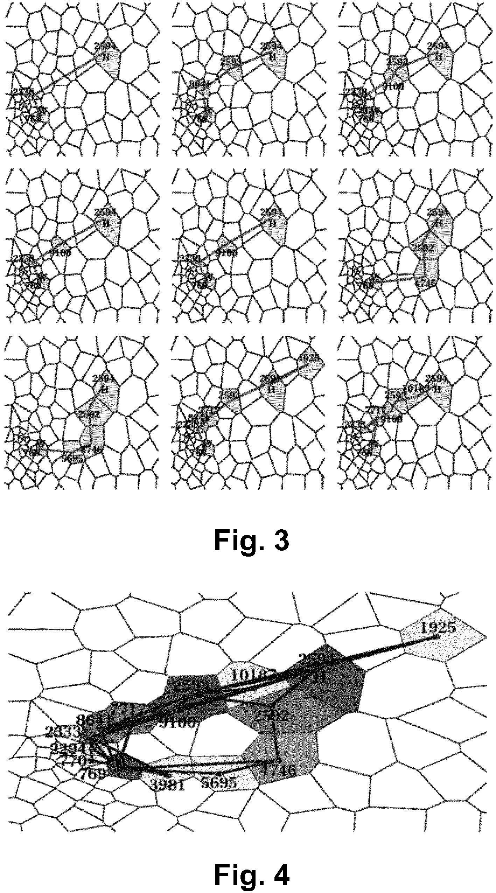

The following algorithm summarizes the route extraction procedure between two locations A and B (in this case, A corresponds to H and B corresponds to W) for the set of network events $\varepsilon$ for a user and considering T=1hour. Fig. 3 presents an example of the routes captured for the user to go from home H to work W.

```
Algorithm    Extract trajectories between to locations A and B from a set of network events
ℰ of the same user.
    function EXTRACTTRAJECTORY(ℰ, A, B, T)
        A_neighborhood ← GETVORONOINEIGHBORHOOD(A)
        B_neighborhood ← GETVORONOINEIGHBORHOOD(B)
        T ← empty list
        for all e_a ∈ ℰ do
            if e_a.location ∈ A_neighborhood then
                flag ← True
                e ← NEXTEVENTAFTER(e_a, ℰ)
                while flag == True do
                    if e ∈ A_neighborhood then
                        flag ← False
                    else if e ∈ B_neighborhood then
                        if e.time − e_a.time < T then
                            new trajectory ← all events between and including e_a and e
                            append new trajectory to trajectory
                        end if
                        flag ← FALSE
                    else
                        e ← NEXTEVENTAFTER(e, events)
                    end if
                end while
            end if
        end for

    end function
```

Construction of Graph G (Step 102)

From the set of routes obtained in the previous section the method computes a graph G considering each BTS as a vertex of G. By bts($v$) are denoted the coordinates of the BTS corresponding to some vertex $v$ in G. Similarly, vornoi($v$) gives the Voronoi region corresponding to some vertex $v$. Subsequently, it can also be considered the *direction* of an edge e= ($v_a$, $v_b$), implying the vector between bts($v_a$) and bts($v_b$).

Each one of the single routes extracted in step 101 may contain loops (i.e. a BTS occurs more than once in a sequence). In order to eliminate loops, for each route the method separately considers the sequence of BTS. If some BTS X occurs a second time, the method removes all the BTS between the current occurrence of $X$ and the last occurrence observed in the sequence and keep only the second entry of $X$. Doing this, loops of any kind are "cut away". In particular, consecutive events at the same BTS are removed as well.

As a second step the method aggregates the observed, loop-free routes in the following way. A directed weighted graph $G$ is computed where the vertices represent the BTSs encountered during all the journeys from H to W or vice versa. An edge between two vertices $v1$ and $v2$ means, that in some route, v1 was observed immediately before $v2$. The weight of an edge ($v1$, $v2$) is given by the number of times a transition from v1 to v2 was observed.

Moreover, the method adds two vertices $H$ and $W$ which represent the location of *Home* and *Work* (not necessarily locations of BTS). These vertices are the *source* and the *sink* respectively of $G$. By construction, $G$ represents a *flow network,* that is, for all vertices $v \in V \setminus \{s, t\}$ the sum of the weights of the incoming edges (inflow) equals the sum of the weights of the outgoing edges (outflow) and the outflow of *H* equals the inflow of *W*. During all the processing steps, the method maintains this flow graph property.

Application of Geographical Heuristics to Graph G

Due to the fact that each path of the set of routes might contain a reduced number of points, more than one possible path between home and work and vice versa can potentially be detected due to the fact that the set of routes do not consider the relative order of the active BTSs. This leads to many paths, which actually represent the same commuting route.

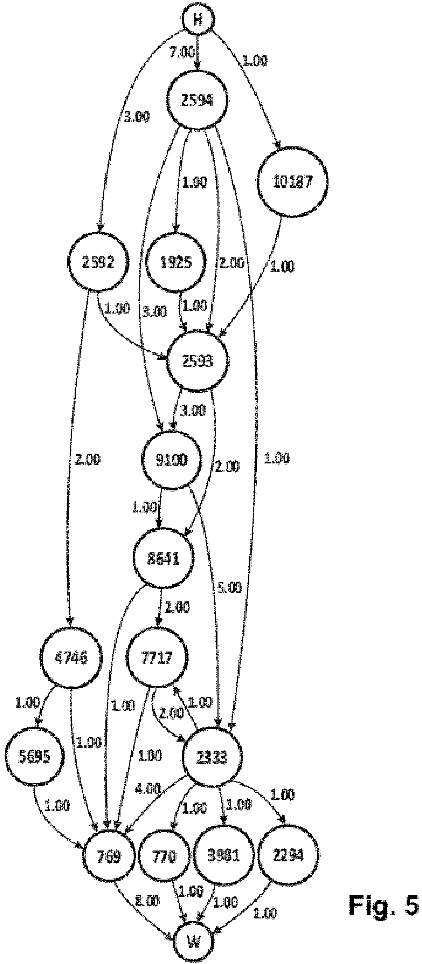

Fig. 4 presents all routes identified for that user in the Home to Work commuting, with the geographical position and coverage of the BTSs associated with it. Fig. 5 presents the same information but in the form of a graph, after applying steps 100-102. According to this graph, there are 4 different routes to go from BTS 2333 to the work place W. However, considering the geographical position of the BTSs, there is actually only one route, namely (2333 -> 2294 -> 770 -> 769 -> *W*).

To reduce the number of possible routes and simplify the graph, the method applies a geographical heuristic algorithm that uses the geographical information of the BTS towers to infer transitions between stations which actually were not observed, but are necessary considering the geographical position of the BTSs. That is, the method introduces edges to be able to

---

**Algorithm    Geographical Heuristic.**

**function** GEOHEURISTIC($G = (V, E, w : E \rightarrow \mathbb{R})$)
    $R^* \leftarrow$ TRANSITIVECLOSURE($G$)
    $E_{add} \leftarrow \bigcup_{(v_a, v_b) \in E}$ INFEREDGES($G, v_a, v_b, R^*$)
    **for all** $e \in E_{add}$ **do**
                                ▷ Some inferred edge can be associated to several transitions.
        $\delta \leftarrow$ sum of weights of edges $(v_a, v_b)$ associated to the inference of $e$
        $w(e) \leftarrow w(e) + \delta$                    ▷ In case $e$ didn't exist before $w(e) = 0$.
    **end for**
**end function**
**function** INFEREDGES($G = (V, E), v_a, v_b, R^*$)
    $V_c \leftarrow \{v | \text{segment}(\text{bts}(v_a), \text{bts}(v_b)) \text{ crosses voronoi}(v)\}$
    $V_c \leftarrow \{v | v \in V_c \wedge (v, a) \notin R^* \wedge (b, v) \notin R^*\}$
    $f \leftarrow$ function $V_c \rightarrow \mathbb{N}$ giving sequence nr. of voronoi($v$) crossed by segment(bts($v_a$), bts($v_b$))
    $H \leftarrow (V_c', E_H = \{(v_i, v_j) | f(v_i) > f(v_j) \wedge (v_i, v_j) \in R^*\})$    ▷ Subgraph only with "backward" edges
    $C \leftarrow$ CONNECTEDCOMPONENTS($H$)
    $V_s \leftarrow \bigcup_{c \in C} \begin{cases} \text{sinks}(c) & \text{if } |\text{sources}(c)| <= |\text{sinks}(c)| \\ \text{sources}(c) & \text{otherwise} \end{cases}$
    $V_s' \leftarrow$ order $V_s$ by increasing values of $f(\cdot)$
    $E_r \leftarrow$ edges between subsequent vertices in sequence $V_s'$
    **return** $E_r$
**end function**

---

determine the relative order of more pairs of BTS, hence drastically reducing the number of different paths. At the same time, the resulting paths have a higher level of detail.

To that end, the following algorithm is provided:

Given as input the graph G, with the corresponding vertex V, edges E and weights w obtained from the previous step, the geographical heuristics algorithm first obtains the transitive closure of G, i.e., for each observed transition of each route (which is represented by an edge in *G*) the method computes the set of Voronoi regions crossed, assuming a straight line between the two stations.

Let $V_c = \{v_{c,1}, \ldots, V_{c,k}\}$ be a sequence of vertices representing Voronoi regions crossed by the edge ($V_a$ and $V_b$) (Where $V_a$ and $V_b$ are the two only BTSs observed as part of a route). The method orders them by projecting the BTS coordinates onto the line segment between the cell centers of $V_a$ and $V_b$ to obtain $V_c$. In the simplest case, the method could just introduce edges $E_h = \{(Va, V'_{c,1}), (V'_{c,1}, V'_{c,2}), \ldots, (V'_{c,k-1}, V'_{c,k}), (V'_{c,k}, vb)\}$. This might however immediately create cycles if there is already some path in G between two vertices $V_{c,j}$ and $V'_{c,i}$ with *j>i*, meaning that the Voronoi region corresponding to $V'_{c,j}$ comes after $V'_{c,i}$ on a straight line from bts($V_a$) to bts($V_b$).

A subsequent effect of the cycle removing algorithm would then potentially remove effectively observed edges in favor of an inferred edge by the geographical heuristic. In order to avoid this, the method adds only a subset of $E_h$, such that it is as large as possible while not creating cycles with existing edges in *G.* If the edge is new, the method adds it with weight $w((V_a, V_b))$, if it is already present in *G,* its weight its increased by $w((V_a, V_b))$. Finally, the method removes the edge ($V_a, V_b$) as it has become redundant.

In order to compute a maximum subset of $E_h$ the method considers the subgraph *H* induced by the sets of vertices $\{V_a, V_b, V_{c,1}, \ldots, V_{c,k}\}$. To simplify the presentation of the algorithm, the method discards edges pointing "forward", i.e. going in the same direction as the edge ($V_a, V_b$). This leaves only edges going "backward". Furthermore, the method adds additional backward edges between $V'_{c,j}$ and $V'_{c,i}$ with *j > i* if there exists a path in *G* from $V'_{c,j}$ to $V'_{c,i}$, that is, ($V'_{c,j}, V'_{c,i}$) is in the transitive closure of *G.* Now, the subgraph *H* contains cycle-free connected components, with each component having potentially several sources and sinks. An isolated node is a special component where source and sink are identical.

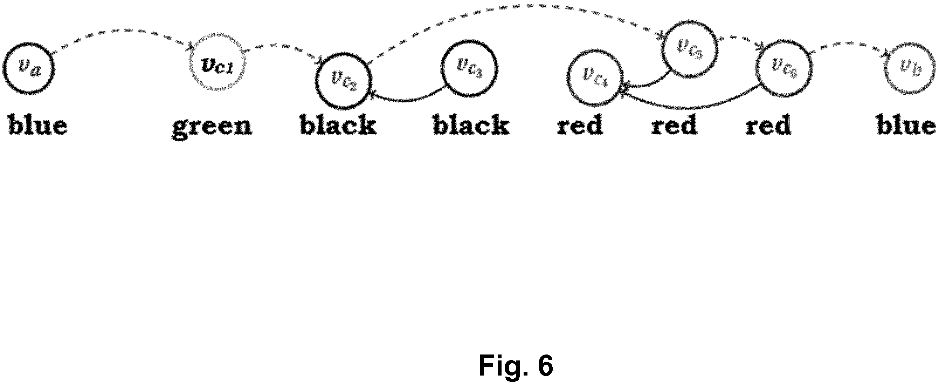

Fig. 6 represents a schematic example of such a subgraph, where vertices are ordered by their relative geographical order between bts($V_a$) and bts($V_b$). Black edges imply that there exists a directed path in G from the tail to the head of the respective edge. The dashed edges are the new inferred edges. Forward edges are not shown. Vertices belonging to the same component are colored the same way.

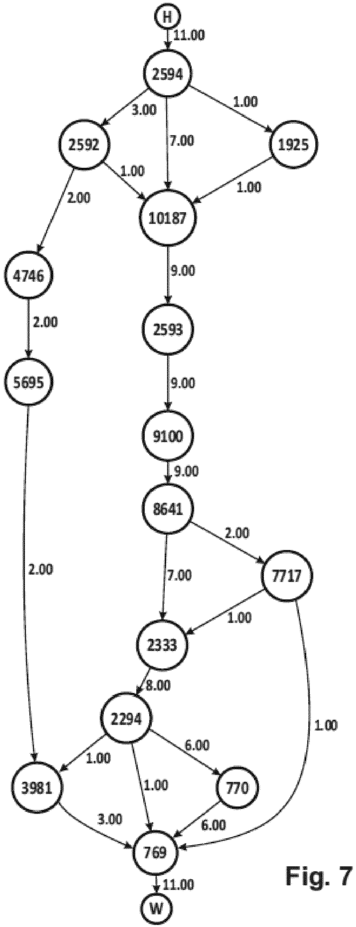

From each connected component, the method selects a subset of vertices for which it adds "forward" edges such that their form a path from $V_a$ to $V_b$. Clearly, any edges between vertices of the same connected component cannot be added, as this would immediately introduce a cycle, unless the method only selects either all sources or all sinks of the same component. The method thus selects all sources or all sinks from each component, whichever there is more. For the component containing $V_a$ and $V_b$ respectively, it simply selects $V_a$ and $V_b$. Then, the method adds edges between the unions of the subsets of selected vertices, such that a path between $V_a$ and $V_b$ with only "forward" edges introduced in the graph. Fig. 7 presents the results if applying the geographical heuristic algorithm to the graph G presented in Fig. 5.

Removal of redundant Edges

As it is assumed that each route gives some partial observation of the mobility, there are many edges in *G* which are redundant: assume the full BTS sequence is (*A,B,C,D,E,F*) and it is indeed observe it entirely in one route. It can also be observed a few times (*A,B,D,F*). This will introduce new edges (*B,D*) and (*D,F*). But according to the provided geographical model assumption, if some other tations (*C*) are observed between two other stations (*B* and *D*) then it is assumed that the user actually always passes by *C*. It could be said that the edge (*B,D*) can be explained by the subpath (*B,C,D*), hence making the edge (*B,D*) redundant. Following is detailed this algorithm:

---

**Algorithm    Removal of Redundant Edges**

---

**function** REMOVEREDUNDANTEDGES($G = (V, E, w : E \rightarrow \mathbb{R})$)

$R^* \leftarrow$ TRANSITIVECLOSURE($G$)

$E_r \leftarrow \{(v_a, v_b) | \exists v \in V . v \neq v_b \wedge (v_a, v) \in E \wedge (v, v_b) \in R^*\}$    ▷ Find redundant edges in $G$

$f_t \leftarrow$ FINISHINGTIMES($G$)    ▷ Compute finishing times of vertices in $G$ using DFS

▷ Sort $E_r$ by increasing finishing time of the tail vertices or in case of ties by decreasing finishing time of the head vertices.

$E'_r \leftarrow$ SORT($E_r, (v_a, v_b) \leq (v_c, v_d) \Leftrightarrow f_t(v_a) < f_t(v_c) \vee (f_t(v_a) = f_t(v_c) \wedge f_t(v_b) \geq f_t(v_d))$

$G'(V', E', w') \leftarrow G(V, E, w)$

$w_{\text{init}} \leftarrow w$

**for all** $e \in E'_r$ **do**

$G' \leftarrow$ ADJUSTWEIGHTS($G'(V', E' \setminus \{e\}, w'), w_{\text{init}}, R^*, w(e), \text{tail}(e), \text{head}(e))$

**end for**

**return** $G'(V', E', w')$

**end function**

**function** ADJUSTWEIGHTS($G(V, E, w), w_{\text{init}}, R^*, f, v, v_{\text{dest}}$)

**if** $v \neq v_{\text{dest}}$ **then**

**for all** $v_n \in \{v_n | (v_n, v_{\text{dest}}) \in R^*\}$ **do**

$f_n \leftarrow f \cdot \frac{w_{\text{init}}((v, v_n))}{\sum_{v_l \in V_n} w_{\text{init}}((v, v_l))}$    ▷ partial flow

$w((v, v_n)) \leftarrow w((v, v_n)) + f_n$

ADJUSTWEIGHTS($G(V, E, w), w_{\text{init}}, R^*, f_n, v_n, v_{\text{dest}}$)

**end for**

**end if**

**return** $G(V, E, w)$

**end function**

---

*A redundant edge* $e = (V_a, V_b)$ *can be characterized as an edge which could be removed and the head of the edge* ($V_b$) *would still be reachable from the tail of the edge* ($V_a$)*, i.e.* $V_a$ *has a neighbor v other than* $V_b$ *from which* $V_b$ *is reachable as well. A redundant edge can be seen as some form of "shortcut" between vertices* $V_a$ *and* $V_b$*. Formally, it is defined:*

$$Is\,\mathrm{Re}\,dundant((v_a, v_b)) \Leftrightarrow \exists v \in V . v \neq v_b \wedge (v_a, v) \in E \wedge v \rightarrow v_b$$

where $x \rightarrow y$ means that vertex y is reachable from x.

In order to maintain the flow graph property, the weights of the edges need to be adjusted after having removed a redundant edge. If a redundant edge $e = (V_a, V_b)$ with weight w($e$) is removed, the method needs to adjust the weights of all the edges lying on paths from $V_a$ to $V_b$. These edges induce a subgraph H with source $V_a$ and sink $V_b$. To adjust the weights the method "pushes down the flow" w($e$) from $V_a$ through *H*. The method does this recursively by distributing the flow available $W_{va}(e)$ at some vertex $V_a$ in H among the edges incident to $V_a$ in $H$. The weight $W_{va}(e)$ is distributed proportionally according to the weights in the current graph (weight function $W_{init}$), that is for some edge $(V_a, V)$ in H the weight gets incremented by:

$$ w_{v_a}(e) \square \frac{w_{init}(v_a, v))}{\sum_{(v_a, v_x) \in H} w_{init}((v_a, v_x))} $$

the method can safely process a redundant edge $e=(V_a, V_b)$, if the subgraph H induced by all paths from $V_a$ to $V_b$ doesn't contain any redundant edges except e. One way to achieve this is to proceed "bottom up" from the sink and process all redundant edges starting "low" in the graph. More precisely, the method computes first the finishing times of the vertices in $G$ in a depth first search (DFS).

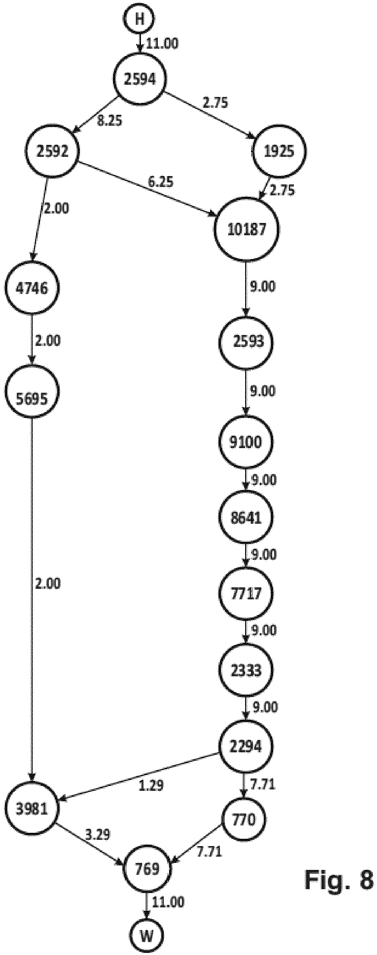

The lowest finishing time corresponds to the sink, the highest to the source. Then, the method sorts the redundant edges by: (1) increasing finishing time of their tail vertex; and (2) if their tail vertices are identical they are sorted by *decreasing* finishing time of their head vertex. With point 1 the method makes sure that there are no redundant edges starting from vertices reachable from the current vertex v. The second point ensures those redundant edges *EH* starting from *v* appearing in the subgraph *H* induced by the paths between the tail and the head of some redundant edge ep are removed before. Note that for the heads of all edges in *EH* there exists a path to the head of *ep.* This results in higher finishing times for the heads in *EH*. Fig. 8 presents the graph of Fig. 7 after applying the algorithm for removal of edges.

Extraction of paths (Step 103)

From the processed graph G as described above, the method want to extract a set of paths from H to W and vice versa as a sequence of BTSs. As G is acyclic, the method can simply compute paths recursively using Depth-first search algorithm (DFS). For each vertex v, the method computes a set of paths for each neighbor and then prepends v in front of each path to obtain a new set of paths to go from v to the sink of G.

Since redundant edges have been removed before, paths in G represent in principle distinct routes, i.e. the method cannot relate two paths with each other. Subsequently, the method calculates some score for each extracted route. It considers the weights of the edges in G after redundant edges are removed. For each vertex v, it calculates the probability that a user will go to one of the neighbors $V_n = \{v1, v2...\}$ of v as:

$$ p(v, v_i) \in path) = \frac{w((v, v_i))}{\sum_{v_j \in V_n} w((v, v_j))} , $$

thereby assuming that the choice of a vertex does not depend on the choices made previously (Markov assumption). Hence, the paths form Markov chains, whose probability can be calculated as:

$$ p((s, v_1, v_2, ..., v_n, t)) = p((s, v_1) p(v_n, t)) \prod_{i=}^{n-1} p(v_i, v_{i+1})) . $$

It has to be noted that in general there is an exponential number of paths in the size of the graph. However, in practice, due to the processing, the number is kept in a reasonable range. If one is interested only in high probability paths, thresholds can be chosen to ignore very improbable transitions or to stop with path reconstruction, if the

```
H 2594 1925 10187 2593 9100 8641 7717 2333 2294 770 769 W (0.214)
H 2594 1925 10187 2593 9100 8641 7717 2333 2294 3981 769 W (0.036)
H 2594 2592 10187 2593 9100 8641 7717 2333 2294 770 769 W (0.487)
H 2594 2592 10187 2593 9100 8641 7717 2333 2294 3981 769 W (0.081)
H 2594 2592 4746 5695 3981 769 W (0.182)
```

probability of a partial path reconstructed so far falls below some threshold.

Following are presented some extracted routes for the graph presented in Fig. 8, along with its probabilities. After applying clustering, the first 4 paths are clustered together and the last one forms a cluster by himself, producing a total of two commuting routes to go from H to W.

Clustering Paths (Step 104)

Despite using geographical heuristics, potentially many routes are extracted from the graph which are actually very similar. That is, for a real route a user takes, the method might obtain several very similar paths with deviations from each other which can be considered to be noise. The method therefore attempts to further reduce the number by clustering them.

Clustering in general is very application dependent and there might be many different valid ways to do it. The method subsequently presents one approach to get a coarse grained overview of the different routes a person takes. In particular, the method is not interested in small local deviations which could be considered as "noise" (e.g. network artefacts or person takes a neighboring street) but only about significant deviations, for example if a user takes public transport she takes a different bus or metro line or when driving, takes another main road.

Very similar paths (i.e. sequences of BTS) share all the BTS stations up to few caused by noisy deviations. Significant deviations translate into a relatively high percentage of distinct BTS. Hence, to calculate the dissimilarity between two paths $T_i$ and $T_j$ the method completes them first, such that consecutive BTS in the sequence are neighbors in the Voronoi diagram. That is, if there is a gap in the original BTS sequence between two stations, the method interpolates the missing BTSs by taking the sequence of BTS lying in the Voronoi regions between the two stations. The method defines the dissimilarity on the completed paths as:

$$ d_s(T_i, T_j) = 1 - \min\left( \frac{shared_{T_j}(T_i)}{|T_i|}, \frac{shared_{T_j}(T_i)}{|T_j|} \right), $$

where $|.|$ denotes the length of the sequence and $shared_{T_x}(T_y)$ denotes the number of cells in the sequence Ty which are in the neighborhood of the path $T_x$. Formally:

$$ shared_{T_x}(T_y) = \left| \left\{ c \in T_y \mid c \in T_x \vee \exists c_s . c_s \in T_x \wedge areNeighbors(c, c_s) \right\} \right| $$

There are other ways to compute the dissimilarity between sequences e.g. by computing the Jaccard index between the set of BTS stations appearing in the sequence. However, the dissimilarity presented above has the advantage of having a direct interpretation as the fraction of one trajectory being in the *neighborhood* (i.e. very close) to some other path. In general, for the large majority of users the largest dissimilarity between any extracted paths is very small. This suggests the majority really only takes one route to go from home to work, which corresponds to our intuition.

The method uses this $d_s$ dissimilarity metric to cluster the paths using hierarchical clustering with complete linkage. It cuts the dendrogram at some fixed, low threshold $t$=20% to obtain clusters. That is, any pair of paths within a cluster deviates in at most t percent, as the method clusters using complete linkage.

Selecting representatives paths (Step 105)

To obtain a representative path out of group or cluster C of routes, the method can compute the *weighted medoid* given by:

$$ \arg\min_{t \in C} \sum_{t_i \in C} w(t_i) d(t_i, t) $$

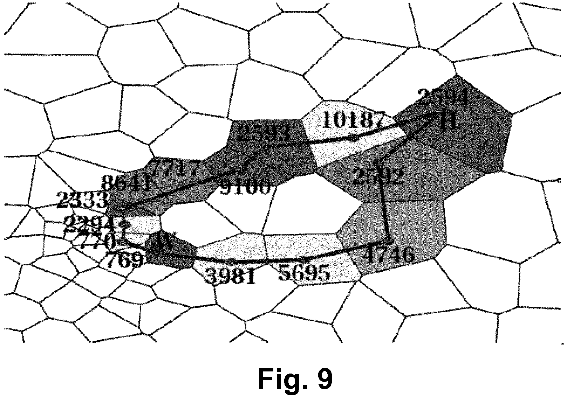

where $w(ti)$ denotes the score of some path $ti$ (e.g. its estimated probability) and d(., .) the dissimilarity between two paths applying the ds dissimilarity metric. The score of each route is given by the weight of the cluster, i.e. the sum of the scores of each extracted graph trajectory. Fig. 9 presents a geographical representation of the two cluster commuting routes identified in the previous step.

Some use cases where present invention is particularly relevant are:

- Traffic analysis: Instead of the large-scale survey of commuters, the proposed method can identify the main routes used to enter and leave an urban region aggregating the commuting routes of individual users. Considering their commuting routes, the proposed method can suggest a new road location maximizing the number of individuals that are helped by the new road.
- Public transit optimization: From NDCND events the proposed method can identify how many people use which means of transportation. Then, the proposed method optimizes the public transit systematically by considering the origin-destination of individuals.
- Target advertising: Identifying potential customers is always important, but it's not easy especially for offline stores. Through this method, it can be known who passes on the street near the store.
- Car sharing: Through the proposed method, the routes, commuting time, and means of transportation that people commute can be identified. With this data for instance then it can be proposed a car sharing for those who have the similar commuting route.

While the foregoing is directed to embodiments of the present invention, other and further embodiments of the invention may be devised without departing from the basic scope thereof. For example, different types of location data such as GPS traces, CDR traces, hand-off patterns, network strength data that measures the signal strength from the near towers, or even location-based service data, such as check-in to venues in Foursquare, or geotagged tweets in Twitter, can be also used by the present invention for computing the commuting routes.

Moreover, other aspects may be implemented in hardware or software or in a combination of hardware and software.

Additionally, the software programs included as part of the invention may be embodied in a computer program product that includes a computer useable medium. For example, such a computer usable medium can include a readable memory device, such as a hard drive device, a flash memory device, a CD-ROM, a DVD/ROM, or a computer diskette, having computer readable program code segments stored thereon. The computer readable medium can also include a communications link, either optical, wired, or wireless, having program code segments carried thereon as digital or analog signals. The scope of the present invention is determined by the claims that follow.

**Claims**

1. A computer implemented method for selecting representatives paths of commuting routes, the method comprising using at least one processor of a computer system for performing following steps:

   - determining an origin location (H) and a destination location (W) of an user on a region (R) by using network communication data traces generated by said user passing through a plurality of base stations giving coverage to said region (R);
   - selecting from said performed network communication data traces, the network communication data traces that are related to a commuting from said origin location (H) to said destination location (W), or vice versa, and determining with the selected network communication data traces, and for a certain period of time, a set of routes;
   - computing a commuting graph (G) including a number of vertices representing said plurality of base stations, and edges representing the transitions defined by each determined route;
   - extracting from the computed commuting graph (G) a set of commuting paths used by the user to move from the origin location (H) to the destination location (W), or vice versa;
   - clustering the extracted set of commuting paths into different groups having a geographical similarity; and
   - selecting a representative path from each one of said clustered different groups, said representative path being selected based on a dissimilarity value that the representative path has with respect to each one of the rest of commuting paths included in each clustered different group.

2. The method of claim 1, comprising computing the representative path by means of a weighted medoid technique.

3. The method of claim 1, wherein the commuting from said origin location (H) to said destination location (W), or vice versa, comprises a threshold duration.

4. The method of any of previous claims, wherein the selected network communication data traces used for determining the set of routes being performed only once in each base station of said plurality of base stations.

5. The method of any of previous claims, wherein each edge of said commuting graph (G) includes a weight which depends on the number of times a transition from a given vertex of the commuting graph (G) is done to another vertex, and wherein said computed commuting graph (G) further includes the origin location (H) and the destination location (W) as vertices.

6. The method of any of previous claims, further comprising applying a geographical heuristics algorithm to said computed commuting graph (G) to reduce the number of said determined set of routes and to reduce redundant edges of the commuting graph (G).

7. The method of claim 6 when depending on claim 5, further comprising adjusting the weight of the edges after having removed a redundant edge.

8. The method of claim 1, wherein said certain period of time at least comprises five working days.

9. The method of previous claims, wherein the origin location (H) comprises the home of the user and the destination location (W) comprises a place where the user works.

10. The method of claim 1, wherein the certain period of time comprises two non-working days.

11. A system for estimating commuting routes, the system comprising:

a processor (111); and
a memory (112) having computer program code instructions embodied thereon and configured to be executed by the processor, the computer program code instructions comprising instructions to:

- determine an origin location (H) and a destination location (W) of an user in a region (R) by using network communication data traces generated by said user passing through a plurality of base stations giving coverage to said region (R);
- select from said performed network communication data traces, the network communication data traces that are related to a commuting from said origin location (H) to said destination location (W), or vice versa, and determine with the selected network communication data traces, and for a certain period of time, a set of routes;
- compute a commuting graph (G) including a number of vertices representing said plurality of base stations, and edges representing the transitions defined by each determined route;
- extract from the computed commuting graph (G) a set of commuting paths used by the user to move from the origin location (H) to the destination location (W), or vice versa;
- cluster the extracted set of commuting paths into different groups having a geographical similarity; and
- select a representative path from each one of said clustered different groups, said representative path being selected based on a dissimilarity value that the representative path has with respect to each one of the rest of commuting paths included in each clustered different group.

12. The system of claim 11, wherein said algorithm further comprises instructions to apply a geographical heuristics algorithm to said computed commuting graph (G) for reducing the number of said determined set of routes and for reducing redundant edges of the commuting graph (G).

13. A computer program product comprising program code instructions which when loaded into a computer system controls the computer system to perform each of the methods according to any one of claims 1 to 10.

100

| Determine an origin and a destination location of a user |
|---|

101

| Pre-processing routes |
|---|

102

| Construction of a commuting Graph |
|---|

103

| Extraction of paths |
|---|

104

| Clustering of paths |
|---|

105

| Selection of representatives paths |
|---|

# Fig. 1

110

111

PROCESSOR

112

MEMORY

120

USER TERMINAL

# Fig. 2

EP 3 038 024 A1

Fig. 3

Fig. 4

Fig. 5

Fig. 6

Fig. 7

Fig. 8

Fig. 9

Europäisches
Patentamt

European
Patent Office

Office européen
des brevets

**EUROPEAN SEARCH REPORT**

Application Number

EP 14 38 2564

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| | The claimed subject-matter, with due regard to the description and drawings in accordance with Art. 92 EPC, relates to processes comprised in the list of subject-matter and activities excluded from patentability under Art. 52(2) and (3) EPC. The information technology employed as an enabler for carrying out said processes is conventional. Its use for carrying out non-technical processes forms part of common general knowledge and it was widely available to everyone at the date of filing of the present application. No documentary evidence is therefore considered necessary. (See Official Journal EPO 11/2007, pages 592ff and 594ff)<br><br>----- | | INV.<br>G06Q10/04 |
| | | | TECHNICAL FIELDS SEARCHED (IPC) |
| | | | G06Q |

The present search report has been drawn up for all claims

| Place of search | Date of completion of the search | Examiner |
|---|---|---|
| The Hague | 29 June 2015 | Streit, Stefan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 3 038 024 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **O. GORNERUP.** Scalable Mining of Common Routes in Mobile Communication Network Traffic Data. *In Proceedings of the 10th international conference on Pervasive Computing,* 2012, 99-106
- **R. A. BECKER.** Route classification using cellular handoff patterns. *In Proceedings of the 13th international conference on Ubiquitous Computing,* 2011, 123-132
- **S. ISAACMAN.** Identifying important places in people's lives from cellular network data. *In Proceedings of the 9th international conference on Pervasive Computing,* 2011, 133-151